# FASCICULE DE BREVET EUROPEEN

(11) **EP 1 244 561 B1**
(45) Date de publication et mention de la délivrance du brevet: **28.04.2004**
(21) Numéro de dépôt: 00987436.3
(22) Date de dépôt: 21.12.2000
(51) Int. Cl.: B60C 17/06

(54) **DISPOSITIF DESTIN TRE FIX AUTOUR D'UNE JANTE COMPORTANT DES MOYENS DE CENTRAGE**
AN EINER FELGE MONTIERBARE VORRICHTUNG MIT ZENTRIERMITTEL
DEVICE DESIGNED TO BE FIXED AROUND A TYRE RIM COMPRISING CENTRING MEANS

(30) Priorité: 23.12.1999 FR 9916437
(43) Date de publication de la demande: 02.10.2002
(73) Titulaire: Sociéte de Technologie Michelin, 63000 Clermont-Ferrand Cedex 09 (FR); Michelin Recherche et Technique S.A., 1763 Granges-Paccot (CH)
(72) Inventeur: DRAP, Sébastien, F-63100 Dallet (FR)
(74) Mandataire: Dequire, Philippe Jean-Marie Denis
(86) Numéro de dépôt international: PCT/EP2000/013125
(87) Numéro de publication internationale: WO 2001/047729

(56) Documents cités:
- EP-A- 0 796 747
- DE-A- 1 605 534
- FR-A- 2 393 689
- FR-A- 2 771 340
- US-A- 4 248 286
- US-A- 4 252 170
- US-A- 5 690 762
- PATENT ABSTRACTS OF JAPAN vol. 1995, no. 09, 31 octobre 1995 (1995-10-31) & JP 07 149118 A (BRIDGESTONE CORP), 13 juin 1995 (1995-06-13)

## Description

La présente invention concerne les dispositifs que l'on souhaite fixer autour d'une jante tels des appuis de sécurité pour pneumatiques de véhicules . Plus particulièrement, elle concerne la liaison entre ces dispositifs et les jantes autour desquelles ils sont montés.

La fonction principale des appuis de sécurité est de supporter la charge en cas de perte importante de pression de gonflage du pneumatique. Lorsque les pneumatiques sont normalement gonflés, les appuis de sécurité ne doivent pas nuire aux propriétés dynamiques des pneumatiques. En particulier, ils doivent rester bien centrés autour de la jante, c'est-à-dire que les axes de rotation de l'appui de sécurité et de la roue doivent rester confondus, pour éviter tout effet de balourd, et cela quelles que soient la température de l'appui et la vitesse de roulage du véhicule. Ils doivent aussi pouvoir être montés autour des jantes des roues des véhicules et démontés de façon aisée, c'est-à-dire avec des efforts limités autorisant un montage et un démontage manuels.

Le brevet US 5,690,762 présente un appui de sécurité réalisé en un matériau élastique destiné à être monté sur une jante de véhicule de tourisme usuelle à base creuse. Cet appui comporte un corps avec un sommet destiné à venir en contact avec le sommet du pneumatique en cas de perte de pression et une base destinée à venir en contact avec la jante. Cet appui comprend en plus des renforts annulaires orientés circonférentiellement et sensiblement inextensibles dont le diamètre est légèrement supérieur au diamètre des crochets des jantes pour lesquelles l'appui est prévu. La base est constituée de deux zones annulaires dont le diamètre intérieur, à l'état libre, est inférieur à celui des parties de la jante sur lesquelles elles doivent s'appuyer : la compression de ces zones annulaires assure donc un bon centrage de l'appui sur la jante. La fonction des renforts annulaires est notamment d'empêcher, qu'en raison des efforts de centrifugation à haute vitesse, les zones annulaires ne s'étendent jusqu'à perdre le contact avec la jante.

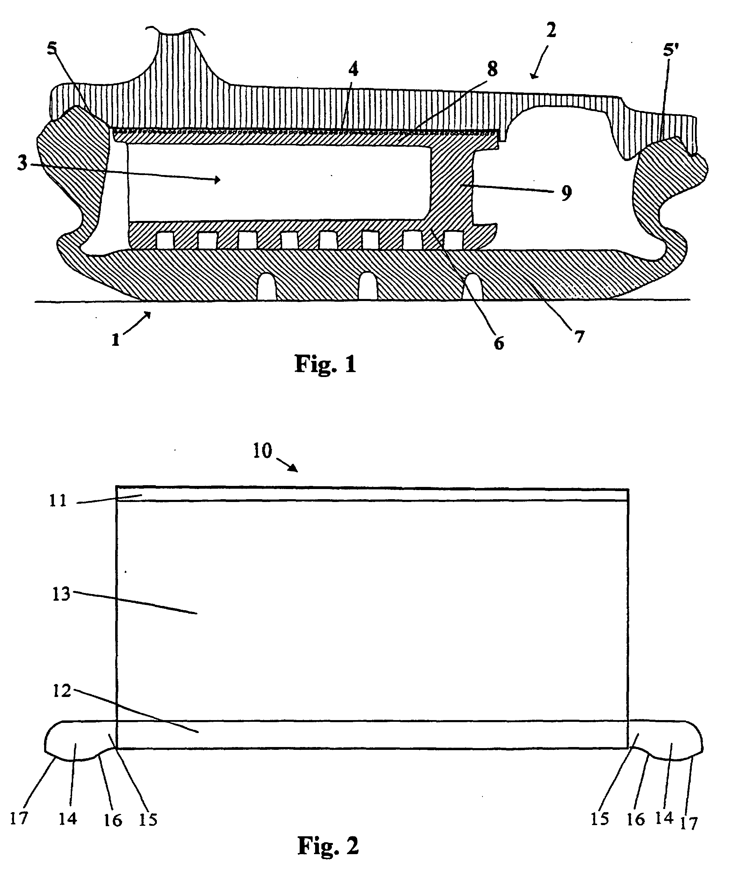

Lorsqu'un appui de sécurité est destiné à équiper une jante en deux parties ou une jante possédant une portée pour un appui dont le diamètre est supérieur à celui de l'un des crochets de la jante telle que présentée à la figure 1, on peut disposer les renforts annulaires dans la base. C'est le cas de l'appui divulgué par la demande EP 0 796 747 A1 (correspondant au préambule de la revendication 1). Une telle position des renforts annulaires facilite la confection de l'appui.

Pour un tel appui, compte tenu des tolérances de fabrication de la jante et de l'appui, il n'est plus possible de disposer des zones annulaires radialement intérieurement dont la compression assure un bon centrage autour de la jante quelle que soit la vitesse tout en assurant un montage et un démontage aisés.

L'invention a pour objet un appui de sécurité comprenant les caractéristiques de la revendication 1.

La zone de centrage a un diamètre radialement intérieur inférieur à celui de la portée d'appui de la jante. Cette zone génère donc, lors du montage de l'appui autour de la jante, des efforts radiaux qui vont centrer l'appui autour de la jante. Dans le cas d'un roulage à haute vitesse, le couplage mécanique entre la zone de résistance de la base de l'appui et le corps implique que c'est cette zone de résistance qui reprend pratiquement tous les efforts de centrifugation dus à la vitesse s'appliquant sur le corps. Le découplage mécanique entre la zone de centrage et le corps implique que cette zone de centrage ne sera pas, ou pratiquement pas, sollicitée par ces efforts dus à la vitesse s'appliquant au corps. En conséquence, la variation des efforts radiaux entre la zone de centrage et la jante sera très faible. voire négligeable, en fonction de la vitesse.

L'appui selon l'invention, comportant un corps et une base est un dispositif unitaire destiné à être enfilé par une seule opération de translation relative autour de la portée d'appui d'une jante. Cette opération est unique, elle peut s'effectuer très simplement avec des efforts réduits, réglés par le dimensionnement de la zone de centrage, et en un temps très court.

Selon un mode de réalisation préférentiel, la zone de centrage est constituée par un élément circonférentiellement continu relié à la zone de résistance par une liaison adaptée pour développer lors du montage de l'appui sur la portée d'appui de la jante des efforts de flexion-compression.

L'élément continu circonférentiellement peut comprendre une armature de renfort.

La zone de centrage peut aussi être constituée par une pluralité de protubérances reliées circonférentiellement par une armature de renfort, cette armature de renfort étant continue circonférentiellement.

La présence d'une armature de renfort contribue à maintenir sensiblement constants dans une gamme large de températures et de vitesses de roulage les efforts de centrage.

La zone de centrage peut s'étendre axialement au-delà du corps.

La zone de résistance à la centrifugation peut comporter une armature de renforcement. sensiblement inextensible circonférentiellement, comprenant des renforts orientés circonférentiellement ou selon des angles α compris entre 10 et 40 degrés. Si nécessaire, cette armature peut aussi comporter des renforts orientés axialement.

Plusieurs modes de réalisation de l'invention sont maintenant décrits, en prenant comme exemple de dispositif un appui de sécurité, à l'aide du dessin annexé dans lequel :
- la figure 1 présente une coupe axiale partielle d'un ensemble monté équipé d'un appui de sécurité non couvert par les revendications;
- la figure 2 présente une coupe axiale d'un mode de réalisation d'un appui ;
- les figures 3a et 3b présentent deux autres modes de réalisation des moyens de centrage d'un appui ;
- la figure 4 est une vue de côté d'un mode particulier de réalisation d'un appui :
- la figure 5 présente un quatrième mode de réalisation d'un appui selon l'invention ;
- la figure 6 est un agrandissement d'une zone de centrage de l'appui de la figure 5 ; et
- la figure 7 présente une coupe axiale d'un autre appui selon l'invention.

On voit à la figure 1 un ensemble monté comportant un pneumatique 1, une jante 2 de roue et un appui de sécurité 3 disposé autour de la portée 4 de la jante 2. La géométrie particulière de cette jante 2 de roue est notamment décrite dans EP-0 796 747 A1 et dans le brevet US 5 634 993. Elle présente deux sièges de bourrelets 5 extérieur et 5' intérieur de diamètres différents et est particulièrement adaptée pour la mise en place aisée de cet appui de sécurité 3. Cet ensemble permet le roulage malgré une baisse de pression importante dans le pneumatique 1. L'appui de sécurité 3 comprend deux parties principales, un corps 9 avec un sommet 6 destiné à venir en contact avec la bande de roulement 7 du pneumatique 1 en cas de pression de gonflage nulle ou très faible - c'est ce qui est représenté à la figure 1 - et une base 8 destinée à venir entourer la portée 4 de la jante 2. Le corps peut être de formes extrêmement variées.

La figure 2 présente un appui 10 selon l'invention dont la base et le corps sont constitués essentiellement d'un matériau élastomère, à base de caoutchouc naturel ou synthétique, ou de tout autre matériau élastique comme par exemple les élastomères de polyuréthanne. Ces matériaux ont des modules d'élasticité usuellement compris entre 1 et 50 MPa (modules d'extension sécants à 20 degrés Celsius et à une déformation de 10 %). L'appui 10 se compose d'un corps 13 avec un sommet 11 et d'une base 12. La base 12 comprend une armature de renforcement sensiblement inextensible circonférentiellement destinée à reprendre les efforts dus à la centrifugation de l'appui à grande vitesse. Cette base 12 comporte aussi des moyens de centrage 14, 15 découplés mécaniquement du corps de l'appui. Les moyens de centrage sont un voile continu 14 de forme sensiblement cylindrique relié à la zone de la base 12 en liaison avec le corps 13 par une liaison 15 de plus faible section et donc de faible rigidité d'extension. Ces moyens sont disposés axialement des deux côtés de la base de l'appui pour obtenir un bon maintien de l'appui autour de la jante. Dans certains cas, ces moyens de centrage peuvent aussi être disposés seulement du côté de l'appui destiné à être enfilé sur la portée 4 de la jante 2 en dernier. Cela permet de limiter les efforts de frottement entre l'appui et la portée 4 lors du montage.

Le voile 14 a un diamètre radialement intérieur inférieur au diamètre de la portée 4 de la jante. Lors du montage, il est soumis à une extension circonférentielle qui assure le centrage de l'appui sur la portée de la jante. Les liaisons 15 sont sollicitées en flexion-compression lors du montage de l'appui autour de la jante. Lors du roulage, compte tenu de la masse très faible du voile 14 et de son découplage mécanique de la zone de résistance de la base 12 les efforts de centrifugation de l'appui sont principalement liés au corps 13 et vont s'exercer sur la zone de résistance de la base 12 et entrainer son extension circonférentielle plus ou moins marquée. Cette extension n'aura pratiquement aucune conséquence sur l'extension circonférentielle du voile 14. On peut donc dire que l'appui 10 comprend dans sa base 12 une zone de résistance destinée à reprendre les efforts de centrifugation de l'appui et une zone de centrage destinée à assurer le centrage dans une très large gamme de vitesses de roulage.

Le voile 14 peut aussi présenter des chanfreins 16 et 17 disposés axialement intérieurement 16 et extérieurement 17, vis-à-vis de la surface de contact entre le voile 14 et la portée d'appui 4 de la jante 2 pour faciliter la mise en place et/ou le démontage de l'appui sur la portée d'appui. Ces chanfreins peuvent être de formes variées, par exemple avoir une génératrice tronconique inclinée entre 20 et 50 degrés de la direction axiale.

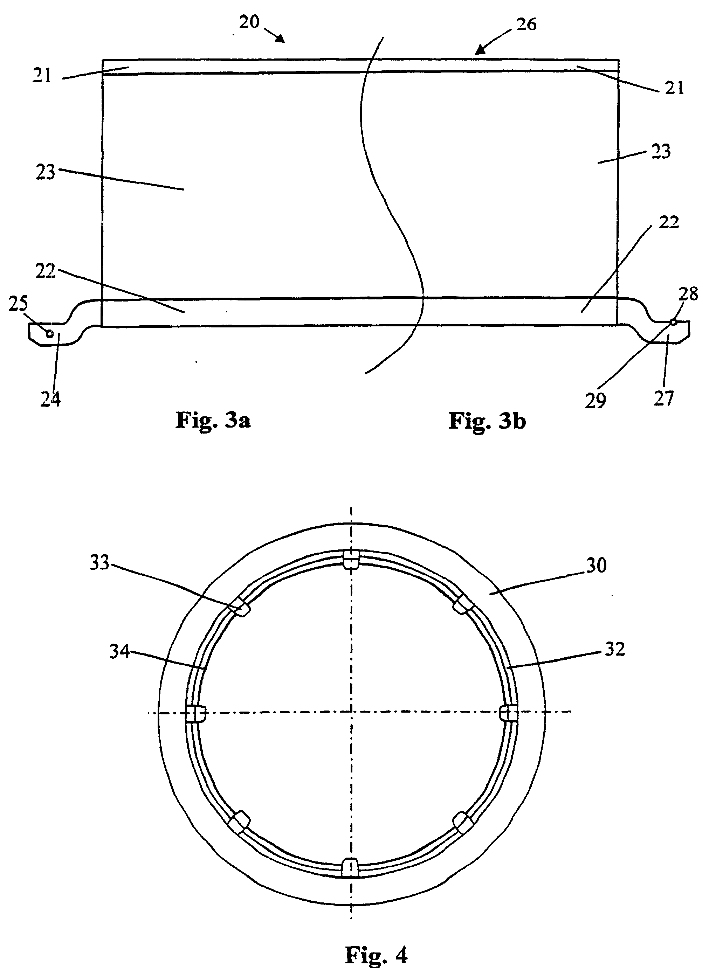

Les figures 3a et 3b présentent des appuis de sécurité 20 et 26 avec deux autres modes de réalisation des moyens de centrage. Les moyens de centrage de l'appui 20 (figure 3a) sont constitués d'un voile cylindrique 24 continu circonférentiellement et comportent une armature de renforcement 25 elle aussi circonférentielle. Cette armature de renforcement 25 est noyée dans le voile cylindrique 24 et a un diamètre d'enroulement légèrement supérieur à celui de la portée d'appui 4 de la jante 2. Elle permet de bien maîtriser les efforts de centrage ainsi que de les conserver à un niveau sensiblement constant quelles que soient la vitesse de roulage et la température.

Les moyens de centrage de l'appui 26 (figure 3b) sont constitués aussi d'un voile cylindrique 27 continu circonférentiellement et d'une armature de renforcement circonférentielle 28. L'armature 28 est disposée dans une gorge 29 de la surface radialement extérieure du voile 27.

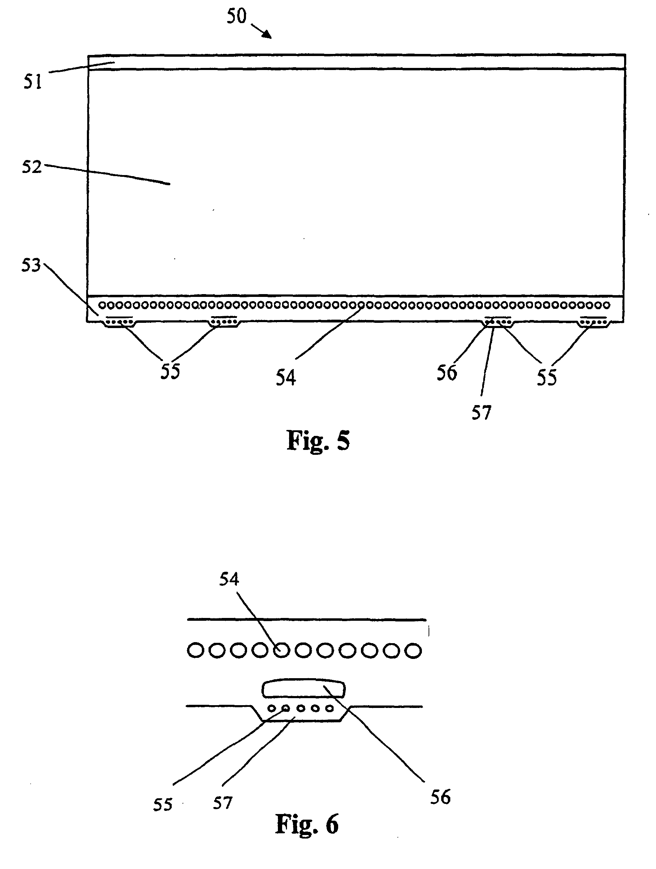

La figure 4 est une vue de côté d'un autre mode de réalisation des moyens de centrage. Dans cet exemple, les moyens de centrage de l'appui 30 comprennent une armature de renforcement 34 continue circonférentiellement maintenue par une pluralité de protubérances 33 régulièrement réparties sur la circonférence de la base 32 de l'appui. La section des protubérances 33 est similaire à celle du voile continu 26 de la figure 3b. Le nombre de protubérances 33 est d'environ 20 à 40.

Ce mode de réalisation des moyens de centrage est utilisable pour des matériaux constitutifs de la base (ainsi que, éventuellement, du corps) de l'appui de modules relativement élevés, par exemple, un élastomère diénique ou de polyuréthanne de module supérieur à 20 MPa. Il est toutefois particulièrement indiqué lorsque le matériau utilisé est un thermoplastique, tel un polyamide, de module d'élasticité supérieur à 1 GPa. à 20°C. Dans ce dernier cas, la rigidité du matériau est telle que la base de l'appui ne comporte plus systématiquement d'armature de renforcement destinée à supporter les efforts dus à la centrifugation à haute vitesse.

Un autre mode de réalisation d'un appui 50 selon l'invention est décrit à la figure 5. L'appui 50 comprend un corps 52 avec un sommet 51 et une base 53. Une armature de renfort 54 est noyée dans la base 53. Cette armature définit la zone de résistance de la base 54. Cette armature de renfort est très peu extensible circonférentiellement et est adaptée pour reprendre les efforts de centrifugation de l'appui 50 en roulage. La base 53 comprend aussi des zones de centrage 57, ici quatre sont représentées. Dans ces zones 57, le diamètre radialement intérieur est légèrement inférieur au diamètre de la surface intérieure de la base 53. Cela permet de n'avoir de contact en permanence que sous les zones de centrage. Les zones de centrage 57 sont continues circonférentiellement et comprennent une armature de renfort 55 adaptée pour développer lors du montage sur la portée de la jante des efforts acceptables. L'extension de seconde armature de renfort 57 autour de la portée de la jante entraîne l'apparition des efforts de centrage nécessaire pour conserver le contact entre l'appui et la portée de la jante avec le même axe de rotation. Radialement extérieurement de l'armature 55, et donc des zones de centrage 57, on trouve des zones de découplage radial 56. Ces zones permettent de découpler mécaniquement les zones de centrage 57 de la zone de résistance liée à l'armature 54. Les zones de découplage radial ont, par exemple, leurs deux surfaces radialement intérieure et extérieure non liées. Lors d'un roulage à grande vitesse, les efforts de centrifugation vont entraîner une certaine extension de l'armature 54 qui à son tour va entraîner un décollage de ces deux surfaces intérieure et extérieure des zones de découplage radial 56 l'une par rapport à l'autre. Et l'extension de l'armature 54 n'aura pratiquement aucune conséquence sur la sollicitation des armatures de renforcement 55 des zones de centrage 57. On a bien un découplage mécanique de ces deux zones.

Cette zone de découplage peut être obtenue par l'insertion d'un tube fermé aplati lors de la mise en place des matériaux dans le moule de réalisation de l'appui. Ce peut aussi être une feuille en matériau non-adhérent (Téflon, anticollant sur la surface..) disposée au droit des zones de centrage dans le moule.

Une zone de découplage peut aussi être constituée par une couche d'un matériau dont le module est très inférieur à ceux des matériaux environnants.

La rigidité en flexion-extension des liaisons 15, par exemple, doit permettre à l'appui de sécurité d'avoir une fréquence propre de vibration lors d'une sollicitation selon l'axe vertical fortement supérieure au domaine de fréquence de rotation des véhicules (environ de 0 à 50 Hz) afin d'éviter la génération de balourd lors du roulage. La rigidité minimale à donner à la zone de liaison est à déterminer en connaissant la masse d'appui de sécurité considéré et la fréquence propre souhaitée. On choisira préférentiellement une fréquence propre supérieure à 200 Hz. Dans le cas d'un appui de masse 3 kg et comprenant une zone de centrage constituée de 36 protubérances, une rigidité radiale de 4 daN/mm pour chacune des protubérances permet d'obtenir une fréquence propre supérieure à 500 Hz.

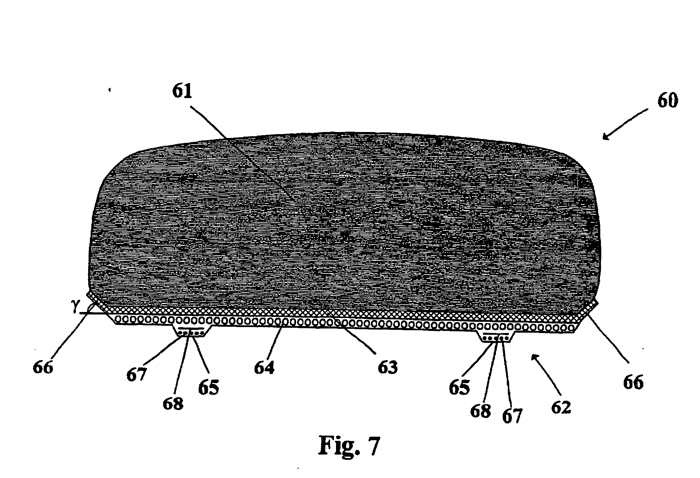

La figure 7 présente en coupe axiale un appui 60 selon l'invention dont le corps 61 est constitué d'un boudin en caoutchouc alvéolaire à cellules fermées. Ce corps 61 peut être associé, par collage notamment, à toutes les bases précédemment décrites équipées de moyens de centrage. Dans l'exemple de la figure 7, les moyens de centrage de la base 62 sont similaires à ceux de la figure 5. La base 62 comprend une armature de renforts orientés sensiblement axialement 63, une première armature de renforts annulaires 64 noyée dans la base 62. La base comprend aussi des zones de centrage 65, deux sont représentées. Ces zones 65 sont continues circonférentiellement et comprennent une seconde armature de renforts annulaires 67 adaptée pour développer lors du montage sur la portée de la jante des efforts acceptables. Comme précédemment, radialement extérieurement relativement aux zones de centrage 65, on trouve des zones de découplage radial 68. La base 62 se prolonge, axialement des deux côtés, par des ailes 66. Ces ailes peuvent ne comporter que l'armature de renforts orientés sensiblement axialement 63 et ont une inclinaison y relativement à la direction axiale comprise entre 30 et 50 degrés. Ces ailes 66 sont collées au corps 61 et favorisent son maintien latéral lors de roulages gonflé à grande vitesse. La base 62 et le corps 61 sont collés par des colles usuelles.

Les armatures de renfort des zones de résistance des bases des appuis selon l'invention, peuvent être composées de renforts tels des fils, câbles, assemblages, ou tout équivalent, par exemple en aramide ou en Nylon. Ces armatures de renforcement peuvent aussi être constituées d'un enroulement circonférentiel de renforts en une ou plusieurs couches, elles peuvent aussi être un binappe croisé dont les renforts sont orientés selon des angles ± α ; α de l'ordre de 10 à 40 degrés relativement à la direction circonférentielle pour garantir une bonne résistance à la centrifugation de l'appui lors de roulages à vitesse élevée. Lorsque la portée d'appui de la jante est constituée de deux zones cylindriques séparées d'une gorge circonférentielle d'allégement, on peut aussi avantageusement compléter l'armature de renfort de la base par un ensemble de renforts orientés axialement. Cela améliore le fonctionnement de cet appui sur cette portée de surface limitée. Les armatures de renforcement des zones de centrage sont tout à fait similaires avec une rigidité en extension adaptée pour permettre un montage aisé de l'appui sur la jante.

## Revendications

1. Appui de sécurité (10, 20, 26, 30, 50, 60) destiné à être enfilé par une opération de translation relative autour d'une portée (4) de jante (2) de roue, comportant un corps (13, 23, 52, 61) et une base (12, 22, 32, 53, 62) reliée à ledit corps et destinée à s'adapter autour de la jante avec une zone de centrage dont la surface radialement intérieure a, à l'état libre, un diamètre inférieur à celui de la portée d'appui de ladite jante, ladite base comportant une zone de résistance (54, 64) sensiblement inextensible circonférentiellement et mécaniquement reliée au corps, ladite base (12, 22, 32, 53, 62) étant sensiblement cylindrique, **caractérisé en ce que** ladite zone de centrage (14, 24, 27, 57, 65) est mécaniquement reliée à ladite zone de résistance par des liaisons de faible rigidité en extension et ainsi mécaniquement découplée de ladite zone de résistance (54, 64) de telle sorte que, lors d'une mise en rotation de l'appui, une augmentation du diamètre de ladite zone de résistance liée aux efforts de centrifugation n'entraîne pas d'augmentation sensible du diamètre de ladite zone de centrage.

2. Appui (10, 20, 26, 30) selon la revendication 1, dans lequel le diamètre radialement intérieur de ladite zone de résistance est légèrement supérieur au diamètre extérieur de la portée d'appui de la jante.

3. Appui (10, 20, 26, 30) selon l'une des revendications 1 et 2, dans lequel la zone de centrage est constituée par un élément circonférentiellement continu (14, 24, 27) relié à la zone de résistance par une liaison (15) adaptée pour développer lors du montage de l'appui sur la portée d'appui de la jante des efforts de flexion-compression.

4. Appui (20, 26, 30) selon la revendication 3, dans lequel l'élément continu circonférentiellement comprend une armature de renfort (25, 28, 34).

5. Appui (30) selon l'une des revendications 1 à 4, dans lequel la zone de centrage est constituée par une pluralité de protubérances (33) reliées circonférentiellement par une armature de renfort (34), ladite armature de renfort étant continue circonférentiellement.

6. Appui (10, 20, 26, 30) selon l'une des revendications 3 à 5, dans lequel ledit élément continu circonférentiellement (14, 24, 27, 34) s'étend axialement au-delà dudit corps.

7. Appui (10, 20, 26, 30, 50, 60) selon l'une des revendications 1 à 6, dans lequel la zone de résistance comporte une armature de renforcement avec des renforts orientés circonférentiellement (54, 64).

8. Appui (10, 20, 26, 30, 50, 60) selon l'une des revendications 1 à 6, dans lequel la zone de résistance comporte une armature de renforcement avec des renforts orientés selon des angles α compris entre 10 et 40 degrés relativement à la direction circonférentielle.

9. Appui (60) selon l'une des revendications 7 et 8, dans lequel l'armature de renforcement de la zone de résistance comporte en plus des renforts (63) orientés axialement.

10. Appui (10) selon l'une des revendications 1 à 9, dont la base est essentiellement réalisée en un matériau élastomère.

11. Appui (30) selon la revendication 5, dans lequel le matériau constitutif de la base dudit dispositif a un module d'élasticité à 20°C supérieur ou égal à 1 GPa.

12. Appui (30) selon la revendication 11, dans lequel le matériau constitutif de la base est un thermoplastique.

13. Appui (10, 20, 26, 30) selon l'une des revendications 1 à 12, dans lequel la rigidité radiale des liaisons (15) est telle que la fréquence propre dudit dispositif est supérieure à 200 Hz.

14. Appui (60) selon l'une des revendications 1 à 13, dans lequel le corps (61) est constitué par un boudin de forme sensiblement toroïdale réalisé en caoutchouc alvéolaire à cellules fermées.

15. Appui selon la revendication 14, dans lequel la base (62) se prolonge axialement, des deux côtés, par une aile (66) s'étendant radialement vers l'extérieur avec un angle γ compris entre 30 et 50 degrés relativement à la direction axiale.

## Claims

1. Safety support (10, 20, 26, 30, 50, 60) designed to be fitted by an operation of relative translation around a bearing surface (4) of a wheel rim (2), comprising a body (13, 23, 52, 61) and a base (12, 22, 32, 53, 62) connected to the said body and designed to fit around the rim with a centring zone whose radially inside surface has, in the free state, a diameter smaller than that of the bearing surface of the said rim, the said base comprising a zone of resistance (54, 64) which is essentially circumferentially inextensible and is mechanically connected to the body, the said base (12, 22, 32, 53, 62) being essentially cylindrical,
**characterised in that**
the said centring zone (14, 24, 27, 57, 65) is mechanically connected to the said resistance zone by connections of low tensile rigidity and is thus mechanically uncoupled from the said resistance zone (54, 64) in such manner that, when the support is in rotation, an increase in the diameter of the said resistance zone resulting from centrifugal forces does not bring about an appreciable increase of the diameter of the said centring zone.

2. Support (10, 20, 26, 30) according to Claim 1, in which the radially inside diameter of the said resistance zone is slightly larger that the outside diameter of the bearing surface of the rim.

3. Support (10, 20, 26, 30) according to either of Claims 1 and 2, in which the centring zone consists of a circumferentially continuous element (14, 24, 27) connected to the resistance zone by a connection (15) designed to develop flexion-compression forces during the fitting of the support onto the bearing surface of the rim.

4. Support (20, 26, 30) according to Claim 3, in which the circumferentially continuous element comprises a reinforcement (25, 28, 34).

5. Support (30) according to any of Claims 1 to 4, in which the centring zone consists of a plurality of protuberances (33) connected circumferentially by a reinforcement (34), the said reinforcement being circumferentially continuous.

6. Support (10, 20, 26, 30) according to any of Claims 3 to 5, in which the said circumferentially continuous element (14, 24, 27, 34) extends axially beyond the said body.

7. Support (10, 20, 26, 30, 50, 60) according to any of Claims 1 to 6, in which the resistance zone comprises a reinforcement with reinforcing elements orientated circumferentially (54, 64).

8. Support (10, 20, 26, 30, 50, 60) according to any of Claims 1 to 6, in which the resistance zone comprises a reinforcement with reinforcing elements orientated at angles α of between 10° and 40° relative to the circumferential direction.

9. Support (60) according to either of Claims 7 and 8, in which the reinforcement of the resistance zone also comprises reinforcing elements (63) orientated axially.

10. Support (10) according to any of Claims 1 to 9, whose base is essentially made from an elastomer material.

11. Support (30) according to Claim 5, in which the material constituting the base of the said device has a modulus of elasticity at 20°C greater than or equal to 1 GPa.

12. Support (30) according to Claim 11, in which the material constituting the base is a thermoplastic.

13. Support (10, 20, 26, 30) according to any or Claims 1 to 12, in which the radial rigidity of the connections (15) is such that the intrinsic frequency of the said support is higher than 200 Hz.

14. Support (60) according to any of Claims 1 to 13, in which the body (61) consists of a sausage-like structure of essentially toroidal shape made of closed-cell alveolar rubber.

15. Support according to Claim 14, in which the base (62) is extended axially on both sides by a wing (66) extending radially towards the outside with an angle γ between 30° and 50° relative to the axial direction.

## Patentansprüche

1. Sicherheitsabstützung (10, 20, 26, 30, 50, 60), die dazu bestimmt ist, durch einen Vorgang der relativen Verschiebung rund um einen Bereich (4) einer Radfelge (2) aufgezogen zu werden, mit einem Körper (13, 23, 52, 61) und einem Unterbau (12, 22, 32, 53, 62), der mit dem genannten Körper verbunden ist und dazu bestimmt ist, sich rund um eine Felge mit einer Zentrierungszone anzupassen, deren radial innere Oberfläche in freiem Zustand einen Durchmesser hat, der kleiner ist als der des Abstützungsbereiches der genannten Felge, wobei die genannte Felge eine Widerstandszone (54, 64) aufweist, die in Umfangsrichtung im wesentlichen undehnbar ist und mechanisch mit dem Körper verbunden ist, und wobei der genannte Unterbau (12, 22, 32, 53, 62) im wesentlichen zylindrisch ist, **dadurch gekennzeichnet, daß** die genannte Zentrierungszone (14, 24, 27, 57, 65) mechanisch mit der genannten Widerstandszone durch Verbindungen mit geringer Steifigkeit verbunden ist und so mechanisch von der genannten Widerstandszone (54, 64) derart abgekoppelt ist, daß, wenn man die Abstützung in Drehung versetzt, eine Erhöhung des Durchmessers der genannten Widerstandszone, die mit den Kräften der Fliehkraftwirkung zusammenhängt, keine merkliche Erhöhung des Durchmessers der genannten Zentrierungszone nach sich zieht.

2. Abstützung (10, 20, 26, 30) nach Anspruch 1, worin der radial innere Durchmesser der genannten Widerstandszone ein wenig größer ist als der Außendurchmesser des Abstützungsbereiches der Felge.

3. Abstützung (10, 20, 26, 30) nach einem der Ansprüche 1 und 2, worin die Zentrierungszone durch ein in Umfangsrichtung durchgehendes Element (14, 24, 27) gebildet ist, das mit der Widerstandszone durch eine Verbindung (15) verbunden ist, die dazu eingerichtet ist, während der Montage der Abstützung auf dem Abstützungsbereich der Felge Biegungs-/Druckkräfte zu entwickeln.

4. Abstützung (20, 26, 30) nach Anspruch 3, worin das in Umfangsrichtung durchgehende Element eine Verstärkungsbewehrung (25, 28, 34) aufweist.

5. Abstützung (30) nach einem der Ansprüche 1 bis 4, worin die Zentrierungszone von einer Vielzahl von Ausstülpungen (33) gebildet ist, die in Umfangsrichtung durch eine Verstärkungsbewehrung (34) verbunden sind, wobei die genannte Verstärkungsbewehrung in Umfangsrichtung durchgehend ist.

6. Abstützung (10, 20, 26, 30) nach einem der Ansprüche 3 bis 5, worin sich das genannte, in Umfangsrichtung durchgehende Element (14, 24, 27, 34) axial über den genannten Körper hinaus erstreckt.

7. Abstützung (10, 20, 26, 30, 50, 60) nach einem der Ansprüche 1 bis 6, worin die Widerstandszone eine Verstärkungsbewehrung mit in Umfangsrichtung ausgerichteten Bewehrungen (54, 64) aufweist.

8. Abstützung (10, 20, 26, 30, 50, 60) nach einem der Ansprüche 1 bis 6, worin die Widerstandszone eine Verstärkungsbewehrung mit unter Winkeln α ausgerichteten Verstärkungen aufweist, die zwischen 10 und 40 Grad relativ zur Umfangsrichtung liegen.

9. Abstützung (60) nach einem der Ansprüche 7 und 8, worin die Verstärkungsbewehrung der Widerstandszone außerdem Verstärkungen (63) aufweist, die axial ausgerichtet sind.

10. Abstützung (10) nach einem der Ansprüche 1 bis 9, deren Unterbau aus einem Elastomermaterial hergestellt ist.

11. Abstützung (30) nach Anspruch 5, worin das den Unterbau der genannten Vorrichtung bildende Material ein Elastizitätsmodul bei 20°C aufweist, das größer oder gleich 1 GPa ist.

12. Abstützung (30) nach Anspruch 11, worin das den Unterbau bildende Material ein thermoplastisches Material ist.

13. Abstützung (10, 20, 26, 30) nach einem der Ansprüche 1 bis 12, worin die radiale Steifigkeit der Verbindungen (15) so ist, daß die Eigenfrequenz der genannten Vorrichtung größer ist als 200 Hz.

14. Abstützung (60) nach einem der Ansprüche 1 bis 13, worin der Körper (61) von einem Wulst mit im wesentlichen toroidaler Form gebildet ist, der aus geschlossenzelligem Zellkautschuk bzw. Zellgummi hergestellt ist.

15. Abstützung nach Anspruch 14, worin sich der Unterbau (62) axial auf beiden Seiten durch einen Lappen (66) verlängert, der sich radial unter einem Winkel γ nach außen erstreckt, der relativ zur Axialrichtung zwischen 30 und 50 Grad beträgt.
